(19) Europäisches Patentamt
European Patent Office
Office européen des brevets

(11) EP 4 574 907 A1

(12) EUROPEAN PATENT APPLICATION
published in accordance with Art. 153(4) EPC

(43) Date of publication:
**25.06.2025 Bulletin 2025/26**

(21) Application number: **23854887.9**

(22) Date of filing: **15.08.2023**

(51) International Patent Classification (IPC):
***C08L 69/00*** (2006.01) ***C08L 51/04*** (2006.01)

(52) Cooperative Patent Classification (CPC):
**C08L 51/04; C08L 69/00**

(86) International application number:
**PCT/JP2023/029489**

(87) International publication number:
**WO 2024/038853 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.08.2022 JP 2022130465**

(71) Applicant: **Mitsubishi Chemical Corporation**
**Tokyo 100-8251 (JP)**

(72) Inventors:
- **IRIE, Yasuyuki**
  **Tokyo 100-8251 (JP)**
- **HAMAGUCHI, Ryuki**
  **Tokyo 100-8251 (JP)**

(74) Representative: **Vossius & Partner Patentanwälte Rechtsanwälte mbB**
**Siebertstrasse 3**
**81675 München (DE)**

# (54) RESIN COMPOSITION, PELLETS, AND MOLDED ARTICLE

(57) To provide a resin composition, as well as a pellet and a formed article. The resin composition contains, in 100% by mass of the resin composition: (A) 80 to 99% by mass of a polycarbonate resin; and (B) 1 to 20% by mass of an elastomer containing a styrene unit in a proportion of 50% by mass or more of entire constituent units, wherein the (A) polycarbonate resin contains a constituent unit represented by the following formula (1) in a proportion of 8% by mol or more of entire constituent units: wherein $R^1$ represents a methyl group, $R^2$ represents a hydrogen atom or a methyl group:

Formula (1)

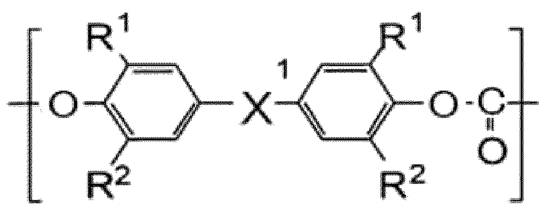

EP 4 574 907 A1

## Description

### Technical Field

The present invention relates to a resin composition, a pellet, and a formed article.

### Background Art

Polycarbonate resins are excellent in mechanical strength, electrical characteristics, transparency, and other properties, and are widely used as engineering plastics in various fields, such as the electrical and electronic equipment field and the automotive field.

However, bisphenol A type polycarbonate resins have a problem of high melt viscosity and poor forming processability, and since polymer alloys with acrylonitrile-butadiene-styrene resins (hereinafter, also referred to as ABS resins) can improve formability compared to the case of polycarbonate resins alone, and can improve impact resistance and heat resistance compared to the case of ABS resins alone, they are widely used as materials that combine strength, heat resistance, and formability in various fields, including the automotive field, electrical and electronic equipment field, and other fields.

Meanwhile, the rapid progress in product thinning and weight reduction in recent years has increased the demand for omission of the coating step in order to simplify the production process. In response, further performance improvement of forming materials has been demanded, and in particular, high hardness has also become desirable.

However, polycarbonate resin and ABS resin compositions have a problem that the surface hardness of formed articles is low.

In order to solve such a problem, there is disclosed a polycarbonate resin composition containing a bisphenol A type polycarbonate resin (A), a bisphenol C type polycarbonate resin (B), a styrene-based resin containing no butadiene-derived constituent unit (C), and a graft copolymer having a polyethylene-based segment and a vinyl-based polymer segment (D), characterized by that the content proportion between the polycarbonate resin (A) and the polycarbonate resin (B) is 0 to 80/20 to 100 in the mass ratio of (A)/(B), that the content of the styrene-based resin containing no butadiene-derived constituent unit (C) is 1 to 30 parts by mass with respect to 100 parts by mass of the total of the polycarbonate resins (A) and (B), and that the content of the graft copolymer (D) is 1 to 10 parts by mass with respect to 100 parts by mass of the total of the polycarbonate resins (A) and (B).

### Citation List

#### Patent Literature

Patent Literature 1: Japanese Patent Laid-Open No. 2019-135291

### Summary of the Invention

#### Technical Problem

From the resin composition described in the above Patent Literature 1, formed articles that are excellent in impact resistance and also in hardness can be obtained. However, transparency may be required depending on the application. Then, when the present inventors conducted investigations, they have found that transparency may be degraded when an elastomer is blended into the bisphenol C type polycarbonate resin as described above.

An object of the present invention is to solve such a problem, and an object thereof is to provide a resin composition capable of providing formed articles that are excellent in impact resistance, excellent in hardness as well, and also excellent in transparency, as well as a pellet and a formed article.

#### Solution to Problem

The present inventors conducted research to address the above-mentioned problems, and as a result, the problems described above are solved by blending a predetermined elastomer into the polycarbonate resin such as the bisphenol C type polycarbonate resin.

Specifically, the problems described above are solved by the following means.

<1> A resin composition comprising, in 100% by mass of the resin composition:

(A) 80 to 99% by mass of a polycarbonate resin; and
(B) 1 to 20% by mass of an elastomer containing a styrene unit in a proportion of 50% by mass or more of entire constituent units,

wherein the (A) polycarbonate resin contains a constituent unit represented by the following formula (1) in a proportion of 8% by mol or more of entire constituent units:

Formula (1)

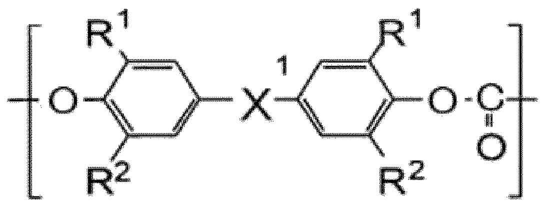

wherein $R^1$ represents a methyl group, $R^2$ represents a hydrogen atom or a methyl group, and $X^1$ represents any of the following formulae:

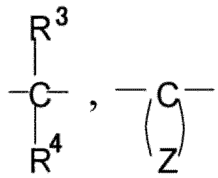

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

<2> The resin composition according to <1>, wherein the (A) polycarbonate resin contains the unit represented by the formula (1) in a proportion of less than 50% by mol of entire constituent units.
<3> The resin composition according to <1> or <2>, wherein, in the constituent unit represented by the formula (1), $R^2$ is a hydrogen atom and $X^1$ is represented by $-C(R^3)(R^4)-$.
<4> The resin composition according to any one of <1> to <3>, further comprising a coloring agent.
<5> The resin composition according to any one of <1> to <4>, wherein a content of the coloring agent is 0.001 to 5 parts by mass with respect to 100 parts by mass of the polycarbonate resin (A).
<6> The resin composition according to any one of <1> to <5>, wherein the (B) elastomer comprises a high impact polystyrene.
<7> The resin composition according to any one of <1> to <5>, wherein the (B) elastomer comprises a high impact polystyrene containing a styrene unit in a proportion of 85% by mass or more of entire constituent units.
<8> The resin composition according to any one of <1> to <7>,

wherein the (A) polycarbonate resin contains the unit represented by the formula (1) in a proportion of less than 50% by mol of entire constituent units,
wherein, in the constituent unit represented by the formula (1), $R^2$ is a hydrogen atom and $X^1$ is represented by $-C(R^3R^4)-$, wherein the resin composition further comprises a coloring agent,
wherein a content of the coloring agent is 0.001 to 5 parts by mass with respect to 100 parts by mass of the polycarbonate resin (A), and

<9> The resin composition according to any one of <1> to <7>,

wherein the (A) polycarbonate resin contains the unit represented by the formula (1) in a proportion of less than 50% by mol of entire constituent units,
wherein, in the constituent unit represented by the formula (1), $R^2$ is a hydrogen atom and $X^1$ is represented by $-C(R^3R^4)-$, wherein the resin composition further comprises a coloring agent,
wherein a content of the coloring agent is 0.001 to 5 parts by mass with respect to 100 parts by mass of the polycarbonate resin (A), and

wherein the (B) elastomer comprises a high impact polystyrene containing a styrene unit in a proportion of 85% by mass or more of entire constituent units.

<10> A pellet of the resin composition according to any one of <1> to <9>.
<11> A formed article formed from the resin composition according to any one of <1> to <9>.
<12> A formed article formed from the pellet according to <10>.

Advantageous Effects of the Invention

The present invention enables provision of a resin composition capable of providing formed articles that are excellent in impact resistance, excellent in hardness as well, and also excellent in transparency, as well as a pellet and a formed article.

Detailed Description of the Invention

From now on, a form for performing the present invention (hereinafter, simply referred to as "the present embodiment") will be described in detail. Note that the present embodiment below is merely an illustration for describing the present invention, and the present invention is not limited to the present embodiment.
Note that, as used herein, the expression "A to B" is used in the sense that the numerical values listed before and after "to" are included as the lower limit value and the upper limit value, respectively.
As used herein, various physical property values and characteristic values are those at 23°C, unless otherwise stated.
As used herein, weight average molecular weight and number average molecular weight are values in terms of polystyrene as measured by the GPC (gel permeation chromatography) method, unless otherwise stated.
If the measurement methods or other details described in the standards presented herein differ from year to year, they are based on the standards as of January 1, 2022, unless otherwise stated.
A resin composition of the present embodiment is characterized by that it contains, in 100% by mass of the resin composition, (A) 80 to 99% by mass of a polycarbonate resin and (B) 1 to 20% by mass of an elastomer containing a styrene unit in a proportion of 50% by mass or more of the entire constituent units, and that the (A) polycarbonate resin contains a constituent unit represented by the following formula (1) in a proportion of 8% by mol or more of the entire constituent units:

Formula (1)

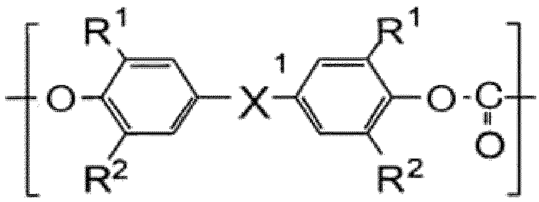

wherein $R^1$ represents a methyl group, $R^2$ represents a hydrogen atom or a methyl group, and $X^1$ represents any of the following formulae:

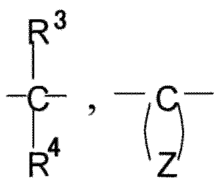

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

By making the configuration as described above, a resin composition capable of providing formed articles that are excellent in impact resistance, excellent in hardness as well, and also excellent in transparency can be obtained.
That is, by using a polycarbonate resin containing the constituent unit represented by the formula (1) in a

proportion of 8% by mol or more of the entire constituent units, such as a bisphenol C type polycarbonate resin (hereinafter, sometimes simply referred to as "polycarbonate resin containing the constituent unit represented by the formula (1)"), formed articles that are excellent in hardness can be obtained.

Also, when an elastomer is blended into a polycarbonate resin containing the constituent unit represented by the formula (1), the impact resistance of the resulting formed article is improved.

However, when an elastomer is blended into a polycarbonate resin containing the constituent unit represented by the formula (1), the transparency of the resulting formed article is found to be poor, depending on the type of elastomer. Furthermore, even formed articles into which a coloring agent has been blended do not fully achieve the inherent color development property of the coloring agent when formed from a resin composition with poor transparency. For example, if a black dye is blended into a resin composition with poor transparency, the formed article becomes grayish in color.

Then, as a result of investigations by the present inventors, it has been found that the high transparency inherent in a polycarbonate resin containing the constituent unit represented by the formula (1) can be maintained by using (B) an elastomer containing a styrene unit in a proportion of 50% by mass or more of the entire constituent units. The reason for this is assumed to be that by using an elastomer in which the proportion of the styrene unit is high, the difference in refractive index with the polycarbonate resin containing the constituent unit represented by the formula (1) becomes small, and the high transparency inherent in the polycarbonate resin containing the constituent unit represented by the formula (1) can be maintained.

The details of the present invention will be described below.

<(A) Polycarbonate Resin>

The resin composition of the present embodiment contains (A) a polycarbonate resin.

The (A) polycarbonate resin contains a constituent unit represented by the following formula (1) in a proportion of 8% by mol or more of the entire constituent units. By containing the constituent unit represented by the formula (1), formed articles that are excellent in transparency and hardness can be obtained:

Formula (1)

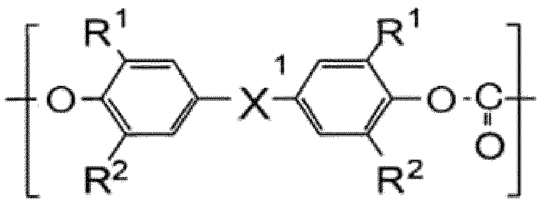

wherein $R^1$ represents a methyl group, $R^2$ represents a hydrogen atom or a methyl group, and $X^1$ represents any of the following formulae:

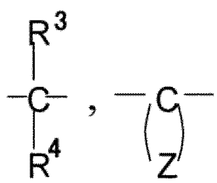

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

In the constituent unit represented by the formula (1), it is preferable that $R^2$ is a hydrogen atom.

In the formula (1), when $X^1$ is

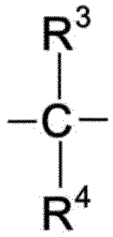

, it is preferable that at least one of $R^3$ and $R^4$ is a methyl group, and it is more preferable that both of them are methyl groups.

Also, when $X^1$ is

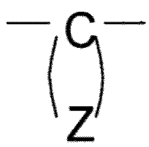

, Z is bonded to carbon C, which is bonded to the two phenyl groups in the above formula (1), to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Examples of the alicyclic hydrocarbon having a substituent formed by Z bonded to C include methyl-substituted products and ethyl-substituted products of the alicyclic hydrocarbon groups described above. Examples of the substituted one include those having these methyl substituent and ethyl substituent. Among these, a cyclohexylidene group, a methyl-substituted product of a cyclohexylidene group (preferably 3,3,5-trimethyl-substituted product), and a cyclododecylidene group are preferable.

In the formula (1), $X^1$ is preferably the following structure.

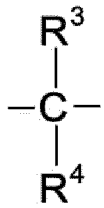

A preferable specific example of the constituent unit represented by the above formula (1) is 2,2-bis(3-methyl-4-hydroxyphenyl) propane, that is, a constituent unit composed of bisphenol C (carbonate constituent unit).

In the present embodiment, the polycarbonate resin may contain only one type of constituent unit represented by the formula (1), or may contain two or more types thereof.

In the present embodiment, the polycarbonate resin containing the constituent unit represented by the formula (1) may further contain a constituent unit represented by the following formula (2). Here, the expression "contain a constituent unit represented by the formula (2)" is intended to mean that the polycarbonate resin contained in the resin composition of the present embodiment may be a polycarbonate resin containing the constituent unit represented by the formula (1) and the constituent unit represented by the formula (2), or it may also be a blended product or the like of a polycarbonate resin containing the constituent unit represented by the formula (1) and a polycarbonate resin containing the constituent unit represented by the formula (2). By containing the constituent unit represented by the formula (2), the heat resistance of the resulting formed article tends to be further improved.

Formula (2)

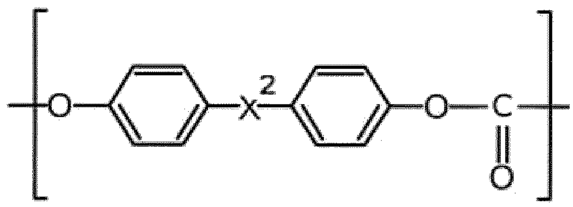

In the formula (2), $X^2$ represents any of the following formulae:

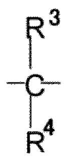 , 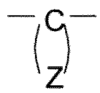

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

In the formula (2), when $X^2$ is

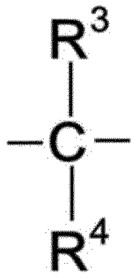

, it is preferable that at least one of $R^3$ and $R^4$ is a methyl group, and it is more preferable that both of them are methyl groups.

Also, when $X^2$ is

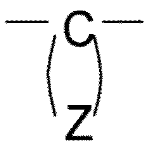

, Z is bonded to carbon C, which is bonded to the two phenyl groups in the above formula (2), to form a divalent alicyclic hydrocarbon group having 6 to 12 carbon atoms, and examples of the divalent alicyclic hydrocarbon group include cycloalkylidene groups such as a cyclohexylidene group, a cycloheptylidene group, a cyclododecylidene group, an adamantylidene group, and a cyclododecylidene group. Examples of the substituted one include those having these methyl substituent and ethyl substituent. Among these, a cyclohexylidene group, a methyl-substituted product of a cyclohexylidene group (preferably 3,3,5-trimethyl-substituted product), and a cyclododecylidene group are preferable.

In the formula (2), $X^2$ is preferably the following structure.

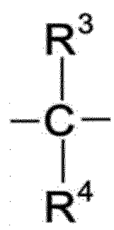

In the present embodiment, the polycarbonate resin may contain only one type of constituent unit represented by the formula (2), or may contain two or more types thereof.

In the present embodiment, the polycarbonate resin may contain other constituent units other than the constituent unit represented by the formula (1) and the constituent unit represented by the formula (2). Examples of the other constituent units include constituent units derived from the dihydroxy compounds shown below.

Bis(4-hydroxyphenyl)methane, 2,2-bis(4-hydroxyphenyl) butane, 2,2-bis(4-hydroxyphenyl)pentane, 2,2-bis(4-hydroxyphenyl)-4-methylpentane, 2,2-bis(4-hydroxy-3-methylphenyl)propane, 2,2-bis(4-hydroxy-3,5-dimethylphenyl) propane, 2,2-bis(4-hydroxy-3-(1-methylethyl)phenyl)propane, 2,2-bis(4-hydroxy-3-tert-butylphenyl)propane, 2,2-bis(4-hydroxy-3-(1-methylpropyl)phenyl)propane, 2,2-bis(4-hydroxy-3-cyclohexylphenyl)propane, 2,2-bis(4-hydroxy-3-phenylphenyl)propane, 1,1-bis(4-hydroxyphenyl)decane, 1,1-bis(4-hydroxyphenyl)cyclohexane, 1,1-bis(4-hydroxyphenyl)-1-phenylethane, 1,1-bis(4-hydroxyphenyl)phenylmethane, 1,1-bis(4-hydroxy-3-methylphenyl)cyclohexane, 1,1-bis(4-hydroxy-3,5-dimethylphenyl)cyclohexane, 1,1-bis(4-hydroxy-3-(1-methylethyl)phenyl)cyclohexane, 1,1-bis(4-hydroxy-3-tert-butylphenyl)cyclohexane, 1,1-bis(4-hydroxy-3-(1-methylpropyl)phenyl)cyclohexane, 1,1-bis(4-hydroxy-3-cyclohexylphenyl)cyclohexane, 1,1-bis(4-hydroxy-3-phenylphenyl)cyclohexane, 1,1-bis(4-hydroxy-3-methylphenyl)-1-phenylethane, 1,1-bis(4-hydroxy-3,5-dimethylphenyl)-1-phenylethane, 1,1-bis(4-hydroxy-3-(1-methylethyl)phenyl)-1-phenylethane, 1,1-bis(4-hydroxy-3-tert-butylphenyl)-1-phenylethane, 1,1-bis(4-hydroxy-3-(1-methylpropyl)phenyl)-1-phenylethane, 1,1-bis(4-hydroxy-3-cyclohexylphenyl)-1-phenylethane, 1,1-bis(4-hydroxy-3-phenylphenyl)-1-phenylethane, 1,1-bis(4-hydroxyphenyl)cyclopentane, 1,1-bis(4-hydroxyphenyl)cyclooctane, 4,4'-(1,3-phenylenediisopropylidene)bisphenol, 4,4'-(1,4-phenylenediisopropylidene)bisphenol, 9,9-bis(4-hydroxyphenyl)fluorene, 9,9-bis(4-hydroxy-3-methylphenyl)fluorene, 4,4'-dihydroxybenzophenone, 4,4'-dihydroxyphenyl ether, 4,4'-dihydroxybiphenyl, 1,1-bis(4-hydroxyphenyl)-3,3,5-trimethylcyclohexane, and 1,1-bis(4-hydroxy-6-methyl-3-tert-butylphenyl)butane.

Also, as one embodiment of the other constituent units, the constituent unit represented by the formula (2) described in paragraph 0008 of International Publication No. WO 2017/099226, the description in paragraphs 0043 to 0052 of International Publication No. WO 2017/099226, and the description in Japanese Patent Laid-Open No. 2011-046769 can be referred to, the contents of which are incorporated herein.

Also, in the (A) polycarbonate resin used in the present embodiment, the proportion of the constituent unit represented by the formula (1) is 8% by mol or more, preferably 10% by mol or more, more preferably 12% by mol or more, and still more preferably 14% by mol or more in the entire constituent units, and depending on the application or other factors, it may be 35% by mol or more, 40% by mol or more, 50% by mol or more, 70% by mol or more, or 75% by mol or more. By setting the proportion to the lower limit value described above or more, there is a tendency that the transparency of the resulting formed article is further improved, and there is also a tendency that the surface hardness of the formed article can be increased. In addition, the proportion of the constituent unit represented by the above formula (1) may be 100% by mol, preferably 95% by mol or less, in the entire constituent units, and depending on the application or other factors, it may be 80% by mol or less, 70% by mol or less, 50% by mol or less, less than 50% by mol, 40% by mol or less, 30% by mol or less, 26% by mol or less, or 20% by mol or less. By setting the proportion to the upper limit value described above or less, there is a tendency that the impact resistance of the resulting formed article is further improved, and there is also a tendency that the heat resistance of the formed article is improved as well. Furthermore, by setting the proportion to the upper limit value described above or less, there is a tendency that weather resistance is also improved.

In the polycarbonate resin used in the present embodiment, the total of the constituent unit represented by the above formula (1) and the constituent unit represented by the formula (2) preferably accounts for 90% by mass or more, more preferably accounts for 95% by mass or more, and still more preferably accounts for 99% by mass or more of the entire constituent units excluding the terminal groups. The upper limit of the total described above is 100% by mass or less.

The following forms are preferable for the polycarbonate resin used in the present embodiment:

(A1) a polycarbonate resin containing the constituent unit represented by the formula (1);

(A2) a blended product of a polycarbonate resin containing the constituent unit represented by the formula (1) and a polycarbonate resin containing the constituent unit represented by the formula (2);

(A3) a polycarbonate resin containing the constituent unit represented by the formula (1) and the constituent unit represented by the formula (2);

(A4) a blended product of a polycarbonate resin containing the constituent unit represented by the formula (1) and a polycarbonate resin containing the constituent unit represented by the formula (1) and the constituent unit represented by the formula (2);

(A5) a blended product of a polycarbonate resin containing the constituent unit represented by the formula (2) and a polycarbonate resin containing the constituent unit represented by the formula (1) and the constituent unit represented by the formula (2);

(A6) a blended product of a polycarbonate resin containing the constituent unit represented by the formula (1), a polycarbonate resin containing the constituent unit represented by the formula (2), and a polycarbonate resin containing the constituent unit represented by the formula (1) and the constituent unit represented by the formula (2);

(A7) a polycarbonate resin of the (A1) to (A6) described above in which the polycarbonate resin or the polycarbonate resins constituting the blended product thereof contain other constituent units other than the constituent unit represented by the formula (1) and the constituent unit represented by the formula (2); and

(A8) a blended product of the polycarbonate resin or blended product of the (A1) to (A7) described above and a polycarbonate resin composed of other constituent units.

As for the viscosity average molecular weight (Mv) of the (A) polycarbonate resin used in the present embodiment, the lower limit value is preferably 5,000 or more, more preferably 8,000 or more, still more preferably 10,000 or more, and even more preferably 12,000 or more. Also, the upper limit value of Mv is preferably 32,000 or less, more preferably 30,000 or less, still more preferably 29,000 or less, and even more preferably 27,000 or less.

By setting the viscosity average molecular weight to the lower limit value described above or more, formability is improved and formed articles with high mechanical strength can be obtained as well. In addition, by setting the viscosity average molecular weight to the upper limit value described above or less, the flowability of the resin composition is improved, and thin-walled formed articles and the like can be efficiently produced as well.
When the resin composition contains two or more types of (A) polycarbonate resins, the viscosity average molecular weight shall be the total of the values obtained by multiplying the viscosity average molecular weight of each polycarbonate resin by its mass fraction.
In particular, the viscosity average molecular weight of the polycarbonate resin containing the constituent unit represented by the formula (1) is preferably 20,000 to 30,000, and more preferably 20,000 to 28,000. Also, the viscosity average molecular weight of the polycarbonate resin containing the constituent unit represented by the formula (2) is preferably 12,000 to 28,000, and more preferably 18,000 to 27,000.
The viscosity average molecular weight (Mv) of the polycarbonate resin is calculated by using methylene chloride as the solvent, determining the intrinsic viscosity (η) (unit: dL/g) at a temperature of 20°C using an Ubbelohde viscometer, and using the following the Schnell's viscosity equation.

$$\eta = 1.23 \times 10^{-4} Mv^{0.83}$$

The (A) polycarbonate resin used in the present embodiment (all polycarbonate resins containing the constituent unit represented by the formula (1) and the constituent unit represented by the formula (2)) is exemplified by having a pencil hardness of 3B to 2H as measured in accordance with ISO 15184, with 2B to 2H being preferable. The pencil hardness is measured in accordance with the method described in Examples, which will be described later.
In particular, it is preferable that the polycarbonate resin containing the constituent unit represented by the formula (1) has a pencil hardness of H to 2H, and it is preferable that the polycarbonate resin containing the constituent unit represented by the formula (2) has a pencil hardness of 2B to HB.
The pencil hardness is measured in accordance with the description in Examples, which will be described later.
The method for producing the polycarbonate resin used in the present embodiment is not particularly limited, but for example, the description in paragraphs 0027 to 0043 and Examples of Japanese Patent Laid-Open No. 2014-065901 can be referred to, the contents of which are incorporated herein.
The content of the (A) polycarbonate resin in the resin composition of the present embodiment is 80% by mass or more, preferably 82% by mass or more, still more preferably 84% by mass or more, even more preferably 86% by mass or more, and even further preferably 88% by mass or more in 100% by mass of the resin composition. By setting the content to the lower limit value described above or more, there is a tendency that the heat resistance of the resulting formed article is further improved. Also, the content of the (A) polycarbonate resin in the resin composition of the present embodiment is 99% by mass or less, preferably 98% by mass or less, and may be 97% by mass or less in 100% by mass of the resin composition.

<(B) Elastomer Containing Styrene Unit in Proportion of 50% by Mass or More of Entire Constituent Units>

The resin composition of the present embodiment contains (B) an elastomer containing a styrene unit in a proportion of 50% by mass or more of the entire constituent units (hereinafter, sometimes simply referred to as "(B) elastomer"). By using an elastomer in which the proportion of the styrene unit is high, along with the impact resistance of the resulting formed article, the high transparency inherent in the polycarbonate resin containing the constituent unit represented by the formula (1) can be maintained.
In the present embodiment, the proportion of the styrene unit in the (B) elastomer (preferably high impact polystyrene) is preferably 50% by mass or more, more preferably 60% by mass or more, still more preferably 70% by mass or more, even more preferably 80% by mass or more, and even further preferably 85% by mass or more, and also, it is preferably 99% by mass or less, more preferably 98% by mass or less, still more preferably 96% by mass or less, even more preferably 94% by mass or less, and even further preferably 92% by mass or less, in the entire constituent units. By setting the proportion to the upper limit value described above or less, there is a tendency that the impact resistance of the resulting formed article is further improved. Also, by setting the proportion to the lower limit value described above or more, there is a tendency that the transparency of the resulting formed article is further improved.
The (B) elastomer in the present embodiment preferably includes a high impact polystyrene (HIPS, high impact polystyrene). The HIPS is a polymer formed by dispersing a rubber-like polymer composed of butadiene rubber or the like in a matrix composed of an aromatic vinyl polymer such as polystyrene in the form of particles. The HIPS can be obtained by, for example, dissolving a rubber-like polymer in a mixed solution of an aromatic vinyl monomer and an inert solvent, and stirring the solution to perform bulk polymerization, suspension polymerization, solution polymerization, or the like. The HIPS may also be, for example, a mixture formed by mixing, in a polymer obtained by dissolving a rubber-like polymer in a

mixed solution of an aromatic vinyl monomer and an inert solvent, a separately obtained aromatic vinyl polymer.

The high impact polystyrene preferably contains the styrene unit in a proportion of 85% by mass or more of the entire constituent units.

By using such a high impact polystyrene in which the proportion of styrene is high, the refractive index becomes close to that of the polycarbonate resin, and the transparency of the resin composition can be improved. Also, the miscibility with the polycarbonate resin containing the constituent unit represented by the formula (1) is improved, and the transparency of the resin composition can be improved. In particular, by using the high impact polystyrene in which the proportion of styrene is high in combination with the polycarbonate resin containing the constituent unit represented by the formula (1), the transparency of the resulting resin composition can be further improved.

In addition, by blending a coloring agent into such a highly transparent resin composition, the color of the coloring agent can be appropriately expressed. In particular, by blending a black coloring agent, the jet black property can be further improved.

Also, the high impact polystyrene in which the proportion of styrene is high can achieve good impact resistance even though it is an elastomer with a small amount of rubber component, due to its good miscibility with the polycarbonate resin containing the constituent unit represented by the formula (1).

In the HIPS, as for the matrix portion composed of an aromatic vinyl polymer, the mass average molecular weight in terms of polystyrene, as measured by the GPC (gel permeation chromatography) method at 135°C using trichlorobenzene as the solvent, is not particularly restricted, but is preferably 100,000 or more, and more preferably 150,000 or more. Also, there are no particular restrictions on the average particle size of the rubber-like polymer, but generally, 0.4 to 6.0 μm is appropriate.

The content of the (B) elastomer in the resin composition of the present embodiment is 1% by mass or more, preferably 2% by mass or more, and still more preferably 3% by mass or more in 100% by mass of the resin composition. By setting the content to the lower limit value described above or more, there is a tendency that the impact resistance of the resulting formed article is further improved. Also, the content of the (B) elastomer in the resin composition of the present embodiment is 20% by mass or less, preferably 18% by mass or less, still more preferably 16% by mass or less, even more preferably 14% by mass or less, and even further preferably 12% by mass or less in 100% by mass of the resin composition. By setting the content to the upper limit value described above or less, there is a tendency that the appearance failure of the resulting formed article is further improved.

The resin composition of the present embodiment may contain only one type of (B) elastomer, or may contain two or more types thereof. When two or more types are contained, it is preferable that the total amount is in the range described above.

One form of the resin composition of the present embodiment can be of a configuration that is substantially free from elastomers other than the HIPS. The expression "substantially free from" means that the content of elastomers other than the HIPS among the (B) elastomer contained in the resin composition is less than 10% by mass, preferably less than 5% by mass, more preferably less than 3% by mass, and still more preferably less than 1% by mass, of the content of the (B) elastomer.

<Ultraviolet Absorber>

The resin composition of the present embodiment may contain an ultraviolet absorber.

Preferable examples of the ultraviolet absorber include a benzotriazole-based ultraviolet absorber, a benzoxazine-based ultraviolet absorber, a triazine-based ultraviolet absorber, and a malonate ester-based ultraviolet absorber, and the benzotriazole-based ultraviolet absorber is preferable.

Examples of the benzotriazole-based ultraviolet absorber include 2-(2-hydroxy-5-methylphenyl)-2H-benzotriazole, 2-(2-hydroxy-3,5-di-tert-butylphenyl)-2H-benzotriazole, 2-(2-hydroxy-3-tert-butyl-5-methylphenyl)-2H-benzotriazole, 2-(2-hydroxy-5-tert-octylphenyl)-2H-benzotriazole, 2-(3,5-di-tert-octyl-2-hydroxyphenyl)-2H-benzotriazole, 2-(3,5-di-tert-amyl-2-hydroxyphenyl)-2H-benzotriazole, 2-(3-lauryl-5-methyl-2-hydroxyphenyl)-2H-benzotriazole, 2-(3,5-di-tert-butyl-2-hydroxyphenyl)-5-chloro-2H-benzotriazole, 2-(3-tert-butyl-5-methyl-2-hydroxyphenyl)-5-chloro-2H-benzotriazole, 2-(3,5-bis(1-methyl-1-phenylethyl)-2-hydroxyphenyl)-2H-benzotriazole, bis(3-(2H-benzotriazol-2-yl)-2-hydroxy-5-methylphenyl)methane, bis(3-(2H-benzotriazol-2-yl)-2-hydroxy-5-(1,1,3,3-tetramethylbutyl)phenyl) methane, bis(3-(2H-benzotriazol-2-yl)-2-hydroxy-5-cumylphenyl)methane, bis(3-(2H-benzotriazol-2-yl)-2-hydroxy-5-octylphenyl)methane, 1,1-bis(3-(2H-benzotriazol-2-yl)-2-hydroxy-5-methylphenyl)octane, 1,1-bis(3-(2H-5-chlorobenzotriazol-2-yl)-2-hydroxy-5-methylphenyl)octane, 1,2-ethanediyl bis(3-(2H-benzotriazol-2-yl)-2-hydroxybenzoate), 1,12-dodecanediyl bis(3-(2H-benzotriazol-2-yl)-4-hydroxybenzoate), 1,3-cyclohexanediyl bis(3-(5-chloro-2H-benzotriazol-2-yl)-2-hydroxybenzoate), 1,4-butanediyl bis(3-(2H-benzotriazol-2-yl)-4-hydroxy-5-methylphenylethanoate), 3,6-dioxa-1,8-octanediyl bis(3-(5-methoxy-2H-benzotriazol-2-yl)-4-hydroxyphenylethanoate), 1,6-hexanediyl bis(3-(3-(2H-benzotriazol-2-yl)-4-hydroxy-5-tert-butylphenyl)propionate), p-xylenediyl bis(3-(3-(2H-benzotriazol-2-yl)-4-hydroxyphenyl)propionate), bis(3-(2H-benzotriazol-2-yl)-4-hydroxytoluyl) malonate, bis(2-(3-(2H-benzotriazol-2-yl)-4-hydroxy-5-octylphenyl)ethyl) terephthalate, bis(3-(2H-benzotriazol-2-yl)-4-hydroxy-5-propyltoluyl) octadioate, 2-(2H-benzotriazol-2-yl)-6-phthalimidomethyl-4-methylphenol, 2-(2H-benzotriazol-2-yl)-6-phthalimidoethyl-4-methylphenol, 2-(2H-benzotriazol-2-yl)-6-phthalimidooctyl-4-methylphenol, 2-(2H-benzotriazol-2-yl)-6-phthalimidomethyl-4-tert-butylphenol, 2-(2H-benzotriazol-2-yl)-6-phthalimidomethyl-4-cumylphenol, and 2-(2H-benzotriazol-2-yl)-4,6-bis(phthalimidomethyl)phenol. Among these, 2-(2-hydroxy-5-tert-octylphenyl)-2H-benzotriazole is preferable.

For the ultraviolet absorber, the description in paragraphs 0059 to 0062 of Japanese Patent Laid-Open No. 2016-216534 and the description in paragraphs 0069 to 0082 of Japanese Patent Laid-Open No. 2018-178019 can be referred to, the contents of which are incorporated herein.

In the resin composition of the present embodiment, the content of the ultraviolet absorber described above is, when the ultraviolet absorber is contained, preferably 0.01 to 1 part by mass with respect to 100 parts by mass of the polycarbonate resin (A). The content of the ultraviolet absorber is more preferably 0.03 to 0.7 parts by mass, and still more preferably 0.05 to 0.5 parts by mass, with respect to 100 parts by mass of the polycarbonate resin (A).

The resin composition of the present embodiment may contain only one type of ultraviolet absorber, or may contain two or more types thereof. When two or more types are contained, it is preferable that the total amount is in the range described above.

<Stabilizer>

The resin composition of the present embodiment may contain a stabilizer.

Examples of the stabilizer include a thermal stabilizer and an antioxidant.

As the thermal stabilizer, a phosphorus-based stabilizer is preferably used.

As the phosphorus-based stabilizer, any of the known ones can be used. Specific examples thereof include: oxoacids of phosphorus such as phosphoric acid, phosphonic acid, phosphorous acid, phosphinic acid, and polyphosphoric acid; acid pyrophosphate metal salts such as sodium acid pyrophosphate, potassium acid pyrophosphate, and calcium acid pyrophosphate; phosphate salts of Group 1 or Group 2B metals such as potassium phosphate, sodium phosphate, cesium phosphate, and zinc phosphate; and organic phosphate compounds, organic phosphite compounds, and organic phosphonite compounds, but organic phosphite compounds are particularly preferable.

As the antioxidant, a hindered phenol-based stabilizer is preferably used.

Specific examples of the hindered phenol-based stabilizer include pentaerythritol tetrakis[3-(3,5-di-tert-butyl-4-hydroxyphenyl)propionate], octadecyl 3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl bis[3-(3,5-di-tert-butyl-4-hydroxyphenyl)propionamide], 2,4-dimethyl-6-(1-methylpentadecyl)phenol, diethyl [[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, and 2-[1-(2-hydroxy-3,5-di-tert-pentylphenyl)ethyl]-4,6-di-tert-pentylphenyl acrylate.

Specific examples of such a hindered phenol-based stabilizer include "Irganox (registered trademark; hereinafter the same applies) 1010" and "Irganox 1076" manufactured by BASF SE, and "Adekastab AO-50" and "Adekastab AO-60" manufactured by Adeka Corporation.

The content of the stabilizer in the resin composition of the present embodiment is normally 0.001 parts by mass or more, preferably 0.005 parts by mass or more, and more preferably 0.01 parts by mass or more, and is normally 1 part by mass or less, preferably 0.5 parts by mass or less, and more preferably 0.3 parts by mass or less, with respect to 100 parts by mass of the polycarbonate resin (A). By setting the content of the stabilizer to the range described above, the effect of adding the stabilizer is more effectively demonstrated.

The resin composition of the present embodiment may contain only one type of stabilizer, or may contain two or more types thereof. When two or more types are contained, it is preferable that the total amount is in the range described above.

<Coloring Agent>

The resin composition of the present embodiment may contain a coloring agent.

The coloring agent may be a pigment or may be a dye, but a dye is preferable.

Also, the coloring agent may be a chromatic coloring agent or may be an achromatic coloring agent.

Examples of the inorganic pigment include carbon black, a sulfide-based pigment such as cadmium red and cadmium yellow; a silicate salt-based pigment such as ultramarine blue; an oxide-based pigment such as titanium oxide, zinc oxide, red iron oxide, chromium oxide, iron black, titanium yellow, zinc-iron brown, titanium cobalt green, cobalt green, cobalt blue, copper-chromium black, and copper-iron black; a chromic acid-based pigment such as lead yellow and

molybdate orange; and a ferrocyanide-based pigment such as iron blue.

Examples of the organic pigment and/or organic dye include a phthalocyanine-based dye/pigment such as copper phthalocyanine blue and copper phthalocyanine green; an azo-based dye/pigment such as nickel azo yellow; a methine-based dye/pigment, a pyrazolone-based dye/pigment, a condensed polycyclic dye/pigment such as thioindigo-based, perinone-based, perylene-based, quinacridone-based, dioxazine-based, isoindolinone-based, and quinophthalone-based; and anthraquinone-based, heterocyclic, and methyl-based dyes/pigments.

In the present embodiment, it is preferable that the coloring agent includes a black dye.

The content of the coloring agent in the resin composition of the present embodiment is normally 0.001 parts by mass or more, preferably 0.005 parts by mass or more, and more preferably 0.01 parts by mass or more, and is normally 5 parts by mass or less, preferably 3 parts by mass or less, and more preferably 1 part by mass or less, with respect to 100 parts by mass of the polycarbonate resin (A). By setting the content of the coloring agent to the range described above, the effect of adding the coloring agent is more effectively demonstrated.

The resin composition of the present embodiment may contain only one type of coloring agent, or may contain two or more types thereof. When two or more types are contained, it is preferable that the total amount is in the range described above.

<Mold Release Agent>

The resin composition of the present embodiment may contain a mold release agent.

Examples of the mold release agent include an aliphatic carboxylic acid, a salt of an aliphatic carboxylic acid, an ester of an aliphatic carboxylic acid with an alcohol, an aliphatic hydrocarbon compound with a number average molecular weight of 200 to 15,000, a polysiloxane-based silicone oil, a ketone wax, and Light Amide, and an aliphatic carboxylic acid, a salt of an aliphatic carboxylic acid, and an ester of an aliphatic carboxylic acid with an alcohol are preferable.

For details of the mold release agent, the description in paragraphs 0055 to 0061 of Japanese Patent Laid-Open No. 2018-095706 can be referred to, the contents of which are incorporated herein.

When the resin composition of the present embodiment contains a mold release agent, its content is preferably 0.05 to 3% by mass, more preferably 0.1 to 0.8% by mass, and still more preferably 0.1 to 0.6% by mass in the resin composition.

The resin composition of the present embodiment may contain only one type of mold release agent, or may contain two or more types thereof. When two or more types are contained, it is preferable that the total amount is in the range described above.

<Other Components>

In addition to the (A) polycarbonate resin and the (B) elastomer, as well as the additives described above, the resin composition of the present embodiment may contain other components other than those described above, as necessary, as long as the desired various physical properties are not significantly impaired. Examples of the other components include other thermoplastic resins and various resin additives.

Examples of the resin additives include an antistatic agent, a flame retardant, a flame retardant auxiliary, an anti-fogging agent, a lubricant, an anti-blocking agent, a flow improver, a plasticizer, a dispersing agent, and an antibacterial agent. Note that one type of resin additive may be contained, or two or more types thereof may be contained in any combination and in any ratio. For details of these, the description in paragraphs 0059 to 0080 of Japanese Patent Laid-Open No. 2014-065901 and the description in paragraphs 0069 to 0093 of Japanese Patent Laid-Open No. 2018-165017 can be referred to, the contents of which are incorporated herein.

The resin composition of the present embodiment is adjusted such that the total of the (A) polycarbonate resin and the (B) elastomer, as well as resin additives to be blended as necessary (for example, a coloring agent, a stabilizer, and an ultraviolet absorber), is 100% by mass.

<Physical Properties of Resin Composition>

The resin composition of the present embodiment preferably has a low haze.

Specifically, the resin composition of the present embodiment preferably has a haze of 70% or less, more preferably 50% or less, still more preferably 48% or less, even more preferably 35% or less, even further preferably 30% or less, and yet further preferably 20% or less, when formed into a flat plate-like test specimen with a thickness of 2 mm. As for the lower limit value of the haze described above, more than 0% is practical, and even 1% or more sufficiently satisfies the required performance.

The haze described above is measured in accordance with the description in Examples, which will be described later.

The resin composition of the present embodiment also preferably has a high hardness.

Specifically, the resin composition of the present embodiment preferably has a pencil hardness of HB or more when formed into a flat plate-like test specimen with a thickness of 2 mm. The upper limit is not specified, but even 4H or less sufficiently satisfies the required performance.

The pencil hardness described above is measured in accordance with the description in Examples, which will be described later.

The resin composition of the present embodiment is also preferably excellent in impact resistance.

Specifically, the resin composition of the present embodiment preferably has a notched Charpy impact strength of 4 $kJ/m^2$ or more, more preferably 5 $kJ/m^2$ or more, even more preferably 9 $kJ/m^2$ or more, and even further preferably 10 $kJ/m^2$ or more, when formed into an ISO tensile test specimen (thickness 4 mm). Also, as for the upper limit of the Charpy impact strength described above, for example, 50 $kJ/m^2$ or less is practical.

<Method for Producing Resin Composition>

There is no restriction on the method for producing the resin composition of the present embodiment, and a wide range of known methods for producing polycarbonate resin compositions can be employed. Examples thereof include a method in which the (A) polycarbonate resin, the (B) elastomer, and other components to be blended as necessary are pre-mixed using, for example, various mixing machines such as a tumbler or a Henschel mixer, and then melt-kneaded using a mixing machine such as a Banbury mixer, a roll, a Brabender, a single screw kneading extruder, a twin screw kneading extruder, or a kneader.

Note that, although the temperature for melt kneading is not particularly restricted, it is normally in the range of 240 to 320°C.

<Formed Article>

One form of the resin composition of the present embodiment is a pellet.

Also, the resin composition described above (for example, pellet) is formed into a formed article by various forming methods. That is, the formed article of the present embodiment is formed from the resin composition or pellet of the present embodiment.

There is no particular restriction on the shape of the formed article, which can be selected as appropriate depending on the application and purpose of the formed article. Examples thereof include film, rod, cylindrical, ring, circular, oval, polygonal, irregular, hollow, frame, box, and panel shapes. Among them, those with a panel shape are preferable, and the thickness is, for example, about 1 mm to 5 mm.

The method for forming the formed article is not particularly restricted, and conventionally known forming methods can be employed. Examples thereof include injection molding, injection compression molding, extrusion molding, profile extrusion, transfer molding, hollow molding, gas-assisted hollow molding, blow molding, extrusion blow molding, IMC (in-mold coating molding) molding, rotational molding, multilayer molding, two-color forming, insert molding, sandwich molding, foam molding, and pressure forming methods. In particular, the resin composition of the present embodiment is suited for formed articles obtained by injection molding, injection compression molding, and extrusion molding methods. However, it goes without saying that the resin composition of the present embodiment is not limited to formed articles obtained by these methods.

The formed article of the present embodiment is suitably used for components of electrical and electronic equipment, office automation equipment, mobile information terminals, machine components, home appliances, vehicle components, various containers, lighting equipment, and the like. Among these, the formed article of the present embodiment is particularly suitable for components for displays, mobile information terminal components, household electrical appliances, or indoor furnishings.

Examples

Hereinafter, the present invention will be described further specifically with reference to Examples. The materials, amounts used, proportions, treatment contents, treatment procedures, and other details shown in Examples below can be changed as appropriate, as long as such changes do not depart from the subject matter of the present invention. Accordingly, the scope of the present invention is not limited to the specific examples shown below.

If the measuring equipment and other instruments used in Examples are difficult to obtain due to discontinuation or other reasons, other equipment with equivalent performance can be used for the measurement.

1. Raw Materials

The following raw materials were used.

[Table 1]

| Component | Symbol | |
|---|---|---|
| Polycarbonate resin (A) | A 1 | Branched aromatic polycarbonate resin produced by melt polymerization method using bisphenol C as starting raw material viscosity average molecular weight: 20000, hardness: 2 H |
| | A 2 | Branched aromatic polycarbonate resin produced by melt polymerization method using bisphenol C as starting raw material viscosity average molecular weight: 26000, hardness: 2 H |
| | A3 | Substantially linear aromatic polycarbonate resin produced by interfacial polymerization method using bisphenol A as starting raw material "S-3000" manufactured by Mitsubishi Engineering-Plastics Corporation viscosity average molecular weight: 21000, hardness: 2 B |
| Elastomer (B) | B1 | High impact polystyrene (HIPS) manufactured by PS Japan Corporation, trade name HT478 content of styrene 91% by mass |
| | B2 | High impact polystyrene (HIPS) manufactured by Petrochemical, trade name CT60 amount of styrene blended 91% by mass |
| | BX | Styrene-based elastomer manufactured by Kaneka Corporation, trade name M732 amount of styrene blended 7% by mass |

[Table 2]

| Component | Symbol | |
|---|---|---|
| Ultraviolet absorber | C1 | 2-(2-Hydroxy-5-(1,1,3,3-tetramethylbutyl)phenyl)benzotriazole manufactured by Shipro Kasei Kaisha Ltd., trade name: SEESORB 709 |
| Stabilizer | D1 | Tris(2,4-di-tert-butylphenyl) phosphite manufactured by Adeka Corporation, trade name: Adekastab 2112 |
| | D2 | n-Octadecyl 3-(4'-hydroxy-3',5'-di-tert-butylphenyl)propionate manufactured by Adeka Corporation, trade name: Adekastab AO-50 |
| | D3 | Pentaerythritol tetrakis[3-(3,5-di-tert-butyl-4-hydroxyphenyl)propionate] manufactured by BASF SE, trade name: Irganox 1010 |
| Mold release agent | E1 | Pentaerythritol tetrastearate manufactured by Emery Oleochemicals LLC, trade name: VPG861 |
| | E2 | Stearyl stearate manufactured by NOF Corporation, trade name: UNISTER M-9676 |
| Coloring agent | F1 | Black dye mixture of red, violet and green dyes, and carbon black trade name: Sumiplast Black HLG manufactured by Sumika Chemtex Co., Ltd. |

<Production Example 1: Production of Polycarbonate Resin A1>

26.14 mol (6.75 kg) of bisphenol C (BPC) and 26.79 mol (5.74 kg) of diphenyl carbonate were placed in an aluminum (SUS) reactor (internal volume of 10 liters) equipped with a stirrer and a distillation condenser. After replacing the inside of the reactor with nitrogen gas, the temperature was raised to 220°C over 30 minutes under a nitrogen gas atmosphere.

Then, the reaction solution in the reactor was stirred, and cesium carbonate ($Cs_2CO_3$) was added to the reaction solution in a molten state as the transesterification reaction catalyst in an amount of $1.5 \times 10^{-6}$ mol with respect to 1 mol of BPC. The reaction solution was stirred and fostered at 220°C for 30 minutes under a nitrogen gas atmosphere. Next, the pressure in the reactor was reduced to 100 Torr over 40 minutes at the same temperature, and the reaction was further allowed to continue for 100 minutes to allow phenol to be distilled out.

Next, the temperature in the reactor was raised to 284°C over 60 minutes while reducing the pressure to 3 Torr, and phenol was distilled out in an amount corresponding to almost the entire theoretical amount of distillation. Next, the pressure in the reactor was kept below 1 Torr at the same temperature, and the reaction was further continued for 60 minutes, after which the polycondensation reaction was terminated. At this time, the stirring speed of the stirrer was 38 rpm, the temperature of the reaction solution immediately before the termination of the reaction was 289°C, and the stirring power was 1.00 kW.

Next, the reaction solution still in a molten state was fed into a twin screw extruder, and butyl p-toluenesulfonate in a molar amount four times that of cesium carbonate was supplied from the first supply port of the twin screw extruder and kneaded with the reaction solution. Thereafter, the reaction solution was extruded into strands through the die of the twin screw extruder and cut with a cutter to obtain pellets of a polycarbonate resin A1.

<Production Example 2: Production of Polycarbonate Resin A2>

26.14 mol (6.75 kg) of bisphenol C (BPC) and 26.79 mol (5.74 kg) of diphenyl carbonate were placed in an aluminum (SUS) reactor (internal volume of 10 liters) equipped with a stirrer and a distillation condenser. After replacing the inside of the reactor with nitrogen gas, the temperature was raised to 220°C over 30 minutes under a nitrogen gas atmosphere.

Then, the reaction solution in the reactor was stirred, and cesium carbonate ($Cs_2CO_3$) was added to the reaction solution in a molten state as the transesterification reaction catalyst in an amount of $1.5 \times 10^{-6}$ mol with respect to 1 mol of BPC. The reaction solution was stirred and fostered at 220°C for 30 minutes under a nitrogen gas atmosphere. Next, the pressure in the reactor was reduced to 100 Torr over 40 minutes at the same temperature, and the reaction was further allowed to continue for 100 minutes to allow phenol to be distilled out.

Next, the temperature in the reactor was raised to 284°C over 60 minutes while reducing the pressure to 3 Torr, and phenol was distilled out in an amount corresponding to almost the entire theoretical amount of distillation. Next, the pressure in the reactor was kept below 1 Torr at the same temperature, and the reaction was further continued for 60 minutes, after which the polycondensation reaction was terminated. At this time, the stirring speed of the stirrer was 38 rpm, the temperature of the reaction solution immediately before the termination of the reaction was 289°C, and the stirring power was 0.60 kW.

Next, the reaction solution still in a molten state was fed into a twin screw extruder, and butyl p-toluenesulfonate in a molar amount four times that of cesium carbonate was supplied from the first supply port of the twin screw extruder and kneaded with the reaction solution. Thereafter, the reaction solution was extruded into strands through the die of the twin screw extruder and cut with a cutter to obtain pellets of a polycarbonate resin A2.

<Measurement of Pencil Hardness of Polycarbonate Resin and Resin Compositions>

The pencil hardness of the polycarbonate resin and the resin composition was determined by forming them into flat plate-like test specimens with a thickness of 2 mm and measuring the pencil hardness in accordance with ISO 15184 using a pencil hardness tester at a load of 750 g.

Specifically, the polycarbonate resin pellets were dried at 100°C for 5 hours, and then injection molded using an injection molding machine ("α-2000i-150B" manufactured by Fanuc Corporation) under the following conditions: cylinder set temperature of 260°C, mold temperature of 70°C, screw speed of 100 rpm, and injection speed of 30 mm/sec, producing a flat plate-like test specimen (150 mm × 100 mm × 2 mm thick). For this flat plate-like test specimen, the pencil hardness as measured in accordance with ISO 15184 using a pencil hardness tester (manufactured by Toyo Seiki Seisaku-sho, Ltd.) at a load of 750 g was determined.

<Measurement of Styrene Content in (B) Elastomer (Styrenic Elastomer)>

From the mass of carbon, hydrogen, and oxygen measured using a fully automated elemental analyzer, the mass ratio (%) in the total amount of (B) elastomer was calculated.

The fully automated elemental analyzer used was vario EL cube manufactured by Elementar Analysensysteme GmbH.

2. Examples 1-1 to 1-12 and Comparative Examples 1-1 to 1-7

<Production of Resin Composition Pellets>

The components described in Table 1 or 2 above were blended in the proportions shown in Table 3 to Table 5 (expressed in parts by mass unless otherwise noted), mixed uniformly with a tumbler mixer, and then one vent was

supplied to a twin screw extruder (manufactured by Shibaura Machine Co., Ltd., TEM26SX) from the upstream feeder. Furthermore, a glass filler was supplied from the middle of the barrel (at a position 3/5 of the barrel length L downstream from the upstream (hopper site) of the extruder) and fed into the extruder from the barrel upstream of the extruder at a cylinder set temperature of 260°C, screw speed of 180 rpm, and discharge rate of 25 kg/hr to melt and knead to obtain resin composition pellets.

<HAZE (Haze)>

As for haze, using a flat plate-like test specimen formed to a thickness of 2 mm, the value at 23°C was measured in accordance with JIS K-7105.

Specifically, the resin composition pellets obtained as described above were dried at 100°C for 5 hours, and then injection molded into a flat plate-like test specimen (90 mm × 50 mm × 2 mm thick) using an injection molding machine ("J55-60H" manufactured by The Japan Steel Works, Ltd.) under the following conditions: cylinder set temperature of 280°C, mold temperature of 80°C, screw speed of 100 rpm, and injection speed of 100 mm/s.

For the flat plate-like test specimen obtained as described above, HAZE (haze) at 23°C was measured using a haze meter in accordance with JIS K-7105.

The haze meter used was the NDH-2000 model haze meter manufactured by Nippon Denshoku Industries Co., Ltd.

The unit of haze is shown in %.

<Charpy Impact Strength>

As for Charpy impact strength, unnotched Charpy impact strength and notched Charpy impact strength were measured for those formed into 3 mm-thick ISO test specimens in accordance with ISO 179.

Specifically, the pellets obtained as described above were dried at 100°C for 5 hours, and then injection molded into a 3 mm-thick ISO test specimen using an injection molding machine ("J85AD" manufactured by The Japan Steel Works, Ltd.) under the following conditions: cylinder temperature of 280°C and mold temperature of 80°C. Unnotched Charpy impact strength and notched Charpy impact strength were measured in accordance with ISO 179.

<Comprehensive Evaluation>

Based on the above evaluation of haze, pencil hardness, and notched Charpy impact strength, the scores for each Example and Comparative Example were calculated and evaluated as follows.

<<Evaluation Categories>>

A: 4 points in total
B: 3 points in total and no 0 points in the evaluation
C: 2 points in total and no 0 points in the evaluation
D: 1 point in total and/or at least one 0 point in the evaluation

<<Haze>>

1 point: haze of 50% or less
0 points: haze of more than 50%

<<Pencil Hardness>>

1 point: pencil hardness of HB or harder
0 points: pencil hardness of B or softer

<<Impact Resistance>>

2 points: notched Charpy impact strength of 10 kJ/$m^2$ or more
1 point: notched Charpy impact strength of 5 kJ/$m^2$ or more and less than 10 kJ/$m^2$
0 points: notched Charpy impact strength of less than 5 kJ/$m^2$

[Table 3]

| | | Examples | | | | | |
|---|---|---|---|---|---|---|---|
| | | 1-1 | 1-2 | 1-3 | 1-4 | 1-5 | 1-6 |
| PC resin (A) | A1 | 5 | 5 | 5 | 5 | 5 | 8 |
| | A2 | 10 | 10 | 10 | 10 | 10 | 17 |
| | A3 | 82 | 75 | 75 | 75 | 75 | 65 |
| Elastomer (B) | B1 | | | | | | |
| | B2 | 3 | 10 | 10 | 10 | 10 | 10 |
| | BX | | | | | | |
| Ultraviolet absorber | C1 | 0.3 | | 0.3 | 0.3 | 0.3 | 0.3 |
| Stabilizer | D1 | 0.03 | 0.03 | 0.03 | 0.03 | 0.03 | 0.03 |
| | D2 | | | | 0.1 | | |
| | D3 | | | | | 0.1 | |
| Mold release agent | E1 | 0.3 | 0.3 | 0.3 | 0.3 | 0.3 | 0.3 |
| | E2 | 0.1 | 0.1 | 0.1 | 0.1 | 0.1 | 0.1 |
| Haze (%) | | 14 | 40 | 40 | 40 | 40 | 36 |
| Pencil hardness | | HB | HB | HB | HB | HB | HB |
| Unnotched Charpy impact strength (kJ/$m^2$) | | NB | NB | NB | NB | NB | NB |
| Notched Charpy impact strength (kJ/$m^2$) | | 10 | 57 | 57 | 57 | 57 | 16 |
| Comprehensive evaluation | | A | A | A | A | A | A |

[Table 4]

| | | Examples | | | | | |
|---|---|---|---|---|---|---|---|
| | | 1-7 | 1-8 | 1-9 | 1-10 | 1-11 | 1-12 |
| PC resin (A) | A1 | 25 | 30 | 5 | 8 | 25 | 30 |
| | A2 | 50 | 60 | 10 | 17 | 50 | 60 |
| | A3 | 15 | | 75 | 65 | 15 | |
| Elastomer (B) | B1 | | | 10 | 10 | 10 | 10 |
| | B2 | 10 | 10 | | | | |
| | BX | | | | | | |
| Ultraviolet absorber | C1 | 0.3 | 0.3 | 0.3 | 0.3 | | |
| Stabilizer | D1 | 0.03 | 0.03 | 0.03 | 0.03 | 0.03 | 0.03 |
| | D2 | | | | | | |
| | D3 | | | | | | |

(continued)

| | | Examples | | | | | |
|---|---|---|---|---|---|---|---|
| | | 1-7 | 1-8 | 1-9 | 1-10 | 1-11 | 1-12 |
| Mold release agent | E1 | 0.3 | 0.3 | 0.3 | 0.3 | 0.3 | 0.3 |
| | E2 | 0.1 | 0.1 | 0.1 | 0.1 | 0.1 | 0.1 |
| Haze (%) | | 26 | 21 | 45 | 41 | 30 | 26 |
| Pencil hardness | | H | 2H | HB | HB | H | 2H |
| Unnotched Charpy impact strength (kJ/m$^2$) | | NB | NB | NB | NB | NB | NB |
| Notched Charpy impact strength (kJ/m$^2$) | | 6 | 6 | 56 | 12 | 5 | 5 |
| Comprehensive evaluation | | B | B | A | A | B | B |

[Table 5]

| | | Comparative Examples | | | | | | |
|---|---|---|---|---|---|---|---|---|
| | | 1-1 | 1-2 | 1-3 | 1-4 | 1-5 | 1-6 | 1-7 |
| PC resin (A) | A1 | 5 | 30 | 5 | 5 | 8 | 25 | 8 |
| | A2 | 10 | 60 | 10 | 10 | 17 | 50 | 17 |
| | A3 | 85 | 10 | 82 | 75 | 65 | 15 | 65 |
| Elastomer (B) | B1 | | | | | | | |
| | B2 | | | | | | | |
| | BX | | | 3 | 10 | 10 | 10 | 10 |
| Ultraviolet absorber | C1 | 0.3 | 0.3 | 0.3 | 0.3 | 0.3 | 0.3 | 0.3 |
| Stabilizer | D1 | 0.03 | 0.03 | 0.03 | 0.03 | 0.03 | 0.03 | 0.03 |
| | D2 | | | | | | | |
| | D3 | | | | | | | |
| Mold release agent | E1 | 0.3 | 0.3 | 0.3 | 0.3 | 0.3 | 0.3 | 0.3 |
| | E2 | 0.1 | 0.1 | 0.1 | 0.1 | 0.1 | 0.1 | 0.1 |
| Haze (%) | | 0.3 | 0.3 | 78 | 92 | 90 | 92 | 90 |
| Pencil hardness | | HB | 2H | HB | HB | HB | H | 2H |
| Unnotched Charpy impact strength (kJ/m$^2$) | | NB | 130 | NB | NB | NB | NB | NB |
| Notched Charpy impact strength (kJ/m$^2$) | | 3 | 3 | 65 | 67 | 62 | 55 | 8 |
| Comprehensive evaluation | | D | D | D | D | D | D | D |

The resin compositions of the present embodiment were capable of providing formed articles that are excellent in impact resistance, excellent in hardness as well, and also excellent in transparency (Examples 1-1 to 1-12). In contrast, when no elastomer was contained (Comparative Example 1-1 and Comparative Example 1-2), impact resistance was inferior. Also, even when the elastomer was contained, the haze was high when the styrene content was low (Comparative Examples 1-3 to 1-7).

3. Examples 2-1 to 2-12 and Comparative Examples 2-1 to 2-7

<Production of Resin Composition Pellets>

The components described in Table 1 or 2 above were blended in the proportions shown in Table 6 to Table 8 (expressed in parts by mass unless otherwise noted), mixed uniformly with a tumbler mixer, and then one vent was supplied to a twin screw extruder (manufactured by Shibaura Machine Co., Ltd., TEM26SX) from the upstream feeder.

Furthermore, a glass filler was supplied from the middle of the barrel (at a position 3/5 of the barrel length L downstream from the upstream (hopper site) of the extruder) and fed into the extruder from the barrel upstream of the extruder at a cylinder set temperature of 260°C, screw speed of 180 rpm, and discharge rate of 25 kg/hr to melt and knead to obtain resin composition pellets.

<Jet Black Property (L* value)>

As for L* value, using the flat plate-like test specimen formed to a thickness of 2 mm as described above, the value at 23°C was measured with a D65/10° light source. A smaller L* value means higher blackness (jet black property).

[Table 6]

| | | Examples | | | | | |
|---|---|---|---|---|---|---|---|
| | | 2-1 | 2-2 | 2-3 | 2-4 | 2-5 | 2-6 |
| PC resin (A) | A1 | 5 | 5 | 5 | 5 | 5 | 8 |
| | A2 | 10 | 10 | 10 | 10 | 10 | 17 |
| | A3 | 82 | 75 | 75 | 75 | 75 | 65 |
| Elastomer (B) | B1 | | | | | | |
| | B2 | 3 | 10 | 10 | 10 | 10 | 10 |
| | BX | | | | | | |
| Ultraviolet absorber | C1 | 0.3 | | 0.3 | 0.3 | 0.3 | 0.3 |
| Stabilizer | D1 | 0.03 | 0.03 | 0.03 | 0.03 | 0.03 | 0.03 |
| | D2 | | | | 0.1 | | |
| | D3 | | | | | 0.1 | |
| Mold release agent | E1 | 0.3 | 0.3 | 0.3 | 0.3 | 0.3 | 0.3 |
| | E2 | 0.1 | 0.1 | 0.1 | 0.1 | 0.1 | 0.1 |
| Coloring agent | F1 | 0.5 | 0.5 | 0.5 | 0.5 | 0.5 | 0.5 |
| L* | | 2.0 | 2.3 | 2.3 | 2.3 | 2.3 | 2.3 |

[Table 7]

| | | Examples | | | | | |
|---|---|---|---|---|---|---|---|
| | | 2-7 | 2-8 | 2-9 | 2-10 | 2-11 | 2-12 |
| PC resin (A) | A1 | 25 | 30 | 5 | 8 | 25 | 30 |
| | A2 | 50 | 60 | 10 | 17 | 50 | 60 |
| | A3 | 15 | | 75 | 65 | 15 | |
| Elastomer (B) | B1 | | | 10 | 10 | 10 | 10 |
| | B2 | 10 | 10 | | | | |
| | BX | | | | | | |
| Ultraviolet absorber | C1 | 0.3 | 0.3 | 0.3 | 0.3 | | |
| Stabilizer | D1 | 0.03 | 0.03 | 0.03 | 0.03 | 0.03 | 0.03 |
| | D2 | | | | | | |
| | D3 | | | | | | |
| Mold release agent | E1 | 0.3 | 0.3 | 0.3 | 0.3 | 0.3 | 0.3 |
| | E2 | 0.1 | 0.1 | 0.1 | 0.1 | 0.1 | 0.1 |
| Coloring agent | F1 | 0.5 | 0.5 | 0.5 | 0.5 | 0.5 | 0.5 |

(continued)

| | Examples | | | | | |
|---|---|---|---|---|---|---|
| | 2-7 | 2-8 | 2-9 | 2-10 | 2-11 | 2-12 |
| L* | 2.2 | 2.5 | 2.5 | 2.7 | 2.5 | 2.8 |

[Table 8]

| | | Comparative Examples | | | | | | |
|---|---|---|---|---|---|---|---|---|
| | | 2-1 | 2-2 | 2-3 | 2-4 | 2-5 | 2-6 | 2-7 |
| PC resin (A) | A1 | 5 | 30 | 5 | 5 | 8 | 25 | 8 |
| | A2 | 10 | 60 | 10 | 10 | 17 | 50 | 17 |
| | A3 | 85 | 10 | 82 | 75 | 65 | 15 | 65 |
| Elastomer (B) | B1 | | | | | | | |
| | B2 | | | | | | | |
| | BX | | | 3 | 10 | 10 | 10 | 10 |
| Ultraviolet absorber | C1 | 0.3 | 0.3 | 0.3 | 0.3 | 0.3 | 0.3 | 0.3 |
| Stabilizer | D1 | 0.03 | 0.03 | 0.03 | 0.03 | 0.03 | 0.03 | 0.03 |
| | D2 | | | | | | | |
| | D3 | | | | | | | |
| Mold release agent | E1 | 0.3 | 0.3 | 0.3 | 0.3 | 0.3 | 0.3 | 0.3 |
| | E2 | 0.1 | 0.1 | 0.1 | 0.1 | 0.1 | 0.1 | 0.1 |
| Coloring agent | F1 | 0.5 | 0.5 | 0.5 | 0.5 | 0.5 | 0.5 | 0.5 |
| L* | | 1.8 | 1.8 | 4.8 | 10 | 10 | 10 | 10 |

The pencil hardness and Charpy impact strength of Examples 2-1 to 2-12 and Comparative Examples 2-1 to 2-7 were almost the same as those of Examples 1-1 to 1-12 and Comparative Examples 1-1 to 1-7, respectively.

## Claims

**1.** A resin composition comprising, in 100% by mass of the resin composition:

(A) 80 to 99% by mass of a polycarbonate resin; and
(B) 1 to 20% by mass of an elastomer containing a styrene unit in a proportion of 50% by mass or more of entire constituent units,

wherein the (A) polycarbonate resin contains a constituent unit represented by the following formula (1) in a proportion of 8% by mol or more of entire constituent units:

Formula (1)

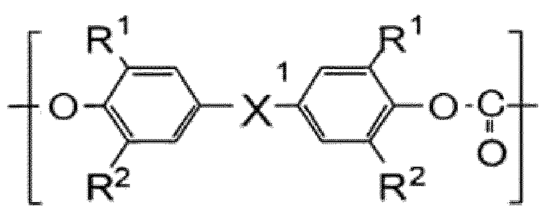

wherein $R^1$ represents a methyl group, $R^2$ represents a hydrogen atom or a methyl group, and $X^1$ represents

any of the following formulae:

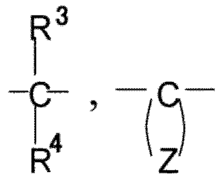

wherein $R^3$ and $R^4$ each independently represent a hydrogen atom or a methyl group, and Z represents a group that is bonded to C to form an alicyclic hydrocarbon having 6 to 12 carbon atoms and optionally having a substituent.

**2.** The resin composition according to claim 1, wherein the (A) polycarbonate resin contains the unit represented by the formula (1) in a proportion of less than 50% by mol of entire constituent units.

**3.** The resin composition according to claim 1 or 2, wherein, in the constituent unit represented by the formula (1), $R^2$ is a hydrogen atom and $X^1$ is represented by $-C(R^3)(R^4)-$.

**4.** The resin composition according to claim 1 or 2, further comprising a coloring agent.

**5.** The resin composition according to claim 1 or 2, wherein a content of the coloring agent is 0.001 to 5 parts by mass with respect to 100 parts by mass of the polycarbonate resin (A).

**6.** The resin composition according to claim 1 or 2, wherein the (B) elastomer comprises a high impact polystyrene.

**7.** The resin composition according to claim 1 or 2, wherein the (B) elastomer comprises a high impact polystyrene containing a styrene unit in a proportion of 85% by mass or more of entire constituent units.

**8.** The resin composition according to claim 1,

wherein the (A) polycarbonate resin contains the unit represented by the formula (1) in a proportion of less than 50% by mol of entire constituent units,
wherein, in the constituent unit represented by the formula (1), $R^2$ is a hydrogen atom and $X^1$ is represented by $-C(R^3R^4)-$, wherein the resin composition further comprises a coloring agent,
wherein a content of the coloring agent is 0.001 to 5 parts by mass with respect to 100 parts by mass of the polycarbonate resin (A), and
wherein the (B) elastomer comprises a high impact polystyrene.

**9.** The resin composition according to claim 1,

wherein the (A) polycarbonate resin contains the unit represented by the formula (1) in a proportion of less than 50% by mol of entire constituent units,
wherein, in the constituent unit represented by the formula (1), $R^2$ is a hydrogen atom and $X^1$ is represented by $-C(R^3R^4)-$, wherein the resin composition further comprises a coloring agent,
wherein a content of the coloring agent is 0.001 to 5 parts by mass with respect to 100 parts by mass of the polycarbonate resin (A), and
wherein the (B) elastomer comprises a high impact polystyrene containing a styrene unit in a proportion of 85% by mass or more of entire constituent units.

**10.** A pellet of the resin composition according to any one of claims 1, 2, 8, and 9.

**11.** A formed article formed from the resin composition according to any one of claims 1, 2, 8, and 9.

**12.** A formed article formed from the pellet according to claim 10.

## INTERNATIONAL SEARCH REPORT

International application No.
**PCT/JP2023/029489**

**A. CLASSIFICATION OF SUBJECT MATTER**

***C08L 69/00***(2006.01)i; ***C08L 51/04***(2006.01)i
FI: C08L69/00; C08L51/04

According to International Patent Classification (IPC) or to both national classification and IPC

**B. FIELDS SEARCHED**

Minimum documentation searched (classification system followed by classification symbols)

C08L69/00; C08L51/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/180493 A1 (MITSUBISHI ENG PLASTICS CORP) 04 October 2018 (2018-10-04) claims, paragraphs [0002]-[0007], [0088]-[0093], table 1, examples | 1-12 |
| Y | JP 2017-2263 A (MITSUBISHI ENG PLASTICS CORP) 05 January 2017 (2017-01-05) claims, paragraphs [0002]-[0007], [0084]-[0091], table 1, examples | 1-12 |
| A | WO 2021/039970 A1 (MITSUBISHI CHEMICAL CORPORATION) 04 March 2021 (2021-03-04) | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 October 2023** | **31 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/029489**

| Patent document cited in search report | Publication date (day/month/year) | Patent family member(s) | Publication date (day/month/year) |
|---|---|---|---|
| WO 2018/180493 A1 | 04 October 2018 | JP 2019-135290 A | |
| | | JP 2019-135291 A | |
| | | CN 110139899 A | |
| JP 2017-2263 A | 05 January 2017 | (Family: none) | |
| WO 2021/039970 A1 | 04 March 2021 | US 2022/0195114 A1 | |
| | | EP 4023698 A1 | |
| | | CN 114302905 A | |
| | | KR 10-2022-0056178 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019135291 A
- WO 2017099226 A
- JP 2011046769 A
- JP 2014065901 A
- JP 2016216534 A
- JP 2018178019 A
- JP 2018095706 A
- JP 2018165017 A